# EUROPEAN PATENT APPLICATION

(11) **EP 4 361 113 A1**
(43) Date of publication of application: **01.05.2024**
(21) Application number: 22910189.4
(22) Date of filing: 23.12.2022
(51) Int. Cl.: C03C 17/36, C03C 27/12, B32B 17/06, B32B 7/12, B32B 27/36, B32B 27/30, B32B 33/00, B60J 1/00

(54) **COATED GLASS AND LAMINATED GLASS**

(30) Priority: 23.12.2021 CN 202111588348
(71) Applicant: Fujian Wanda Automobile Glass Industry Co., Ltd., Fuqing Fuzhou, Fujian 350300 (CN)
(72) Inventor: LU, Yuemin, Fuzhou, Fujian 350300 (CN); ZHANG, Canzhong, Fuzhou, Fujian 350300 (CN); HE, Weilong, Fuzhou, Fujian 350300 (CN)
(74) Representative: Patentanwälte Olbricht Buchhold Keulertz
(86) International application number: PCT/CN2022/141381
(87) International publication number: WO 2023/116878

(57) **Abstract**

The present disclosure provides a coated glass and a laminated glass. The coated glass includes a first glass substrate, a low-emissivity layer, a metal absorption layer and an anti-reflection layer; the low-emissivity layer is deposited on one surface of the first glass substrate and comprises at least one transparent conductive oxide layer; the metal absorption layer is deposited on the low-emissivity layer; and the anti-reflection layer is deposited on the metal absorption layer. The present disclosure provides a low-emissivity glass, with a simple production process, a low emissivity, a low visible light reflectivity and a neutral color, which can be used in the fields of building and vehicle glass. The low- glass having the coated glass and the laminated glass of the present disclosure, which emissivity value and the visible light reflectivity are reduced, and the inner surface of the laminated glass with the low-emissivity layer has a beautiful color.

## Description

### TECHNICAL FIELD

The present disclosure relates to glass coating technologies, particularly to a vehicle window glass coating technology, and more particularly to a coated glass and a laminated glass.

### BACKGROUND

At present, more and more attention has been paid to the heat insulation technology of vehicle glass. By coating one or several layers of nano-scale metal films on a windshield of a vehicle to reflect the external heat, it is possible to achieve an effect of isolating the external heat from entering the vehicle (in summer) or a heat loss in the vehicle (in winter) during a driving process. In particular, due to a large area of a panoramic sunroof glass of the vehicle, the temperature inside the vehicle is most likely to cause a heat radiation or conduction to the outside in winter, which makes the heat insulation effect in the vehicle be not good. Therefore, it is particularly necessary to arrange a layer of heat insulation coating on the sunroof glass, especially on a surface close to the interior of the vehicle, so as to reduce the heat radiation or conduction to the outside caused by the temperature inside the vehicle and achieve a heat preservation effect to a certain extent.

At present, the common process method in the market is to plate a transparent conductive oxide layer (TCO layer) on the glass surface. For example, glass plated with a fluorine-doped tin oxide (FTO) coating in a float production line by a chemical vapor deposition (CVD) method is used as an inner surface substrate of the sunroof glass, and the FTO coating is located at a contact surface between the glass and the air inside the vehicle. The advantage is that the FTO coating has strong mechanical properties and environmental resistance, the disadvantage is that the FTO coating has a high reflectivity, usually more than 10%, and the sunroof glass usually has a low transmittance. The high reflectivity will produce a certain mirror effect, which affects the passengers' riding comfort to a certain extent.

In order to reduce the high reflectivity of the TCO coating, an anti-reflection layer is usually arranged thereon. When a lower reflectivity is required, an anti-reflection coating structure which is more complex with multiple layers is needed. However, the preparation process of an anti-reflection coating structure with four or more layers virtually increases the glass manufacturing cost and the process difficulty.

### SUMMARY

In order to overcome at least one defect in the prior art, the present disclosure proposes a coated glass and a laminated glass, thereby providing a low-emissivity glass with a simple production process, a low emissivity, a low visible light reflectivity and a neutral color, which can be used in the fields of building and vehicle glass.

Specifically, the present disclosure provides a coated glass, including:
a first glass substrate, a low-emissivity layer, a metal absorption layer and an anti-reflection layer, in which
the low-emissivity layer is deposited on one surface of the first glass substrate, and includes at least one transparent conductive oxide (TCO) layer;
the metal absorption layer is deposited on the low-emissivity layer; and
the anti-reflection layer is deposited on the metal absorption layer.

In an embodiment of the present disclosure, the low-emissivity layer has a thickness of 100 nm to 500 nm, and an emissivity value less than 0.3.

In an embodiment of the present disclosure, the transparent conductive oxide layer is selected from an indium tin oxide (ITO) layer, an antimony tin oxide (ATO) layer, an aluminum zinc oxide (AZO) layer, or an fluorine-doped tin oxide (FTO) layer.

In an embodiment of the present disclosure, the anti-reflection layer includes at least one high refractive index layer and at least one low refractive index layer, which are alternately stacked, and the high refractive index layer has a refractive index of 1.7 to 2.3, and the low refractive index layer has a refractive index of 1.4 to1.7.

In an embodiment of the present disclosure, a material of the high refractive index layer is an oxide of at least one selected from Zn, Sn, Nb, Ti, Ni, Cr and Ta, or a nitride or an oxynitride of at least one selected from Si, Zr and Al;

a material of the low refractive index layer is an oxide of at least one selected from Si, Al and B, or a fluoride of at least one selected from Mg, Al and Ba.

In an embodiment of the present disclosure, the high refractive index layer has a thickness of 10 nm to 70 nm, and the low refractive index layer has a thickness of 20 nm to150 nm.

In an embodiment of the present disclosure, the metal absorption layer is configured to absorb at least part of visible light in a wavelength range of 380 nm to 780 nm, and has a thickness of 3.5 nm to 10 nm.

In an embodiment of the present disclosure, the metal absorption layer is in direct contact with the low-emissivity layer, and a material of the metal absorption layer is selected from at least one of Ni, Cr, Ti, Nb, Mo and Si.

In an embodiment of the present disclosure, an innermost barrier layer is further deposited between the low-emissivity layer and the one surface of the first glass substrate, a thickness of the innermost barrier layer is more than or equal to 3 nm, and a material of the innermost barrier layer is an oxide of at least one selected from Zn, Sn, Ti, Si, Al, Nb, Zr, Ni, Mg, Cr and Ta, or a nitride or an oxynitride of at least one selected from Si, Al, Zr, B, and Ti.

In an embodiment of the present disclosure, the coated glass further includes an outermost barrier layer deposited on the anti-reflection layer, a material of the outermost barrier layer is a nitride or an oxynitride of at least one selected from Si, Al, Zr, Ti, B and Ni, and a thickness of the outermost barrier layer is not more than 30 nm.

In an embodiment of the present disclosure, the first glass substrate is made of tinted glass with a visible light transmittance not more than 50%.

Further, the present disclosure further provides a laminated glass mountable on a vehicle, and the laminated glass includes the aforementioned coated glass as described above, a second glass substrate and a bonding layer, the second glass substrate being bonded to the other surface of the first glass substrate through the bonding layer; and the coated glass is located inside the vehicle;

a visible light transmittance of the laminated glass is less than or equal to 20%, and a visible light reflectivity of the laminated glass measured from the interior of the vehicle is less than or equal to 6%.

In an embodiment of the present disclosure, the visible light reflectivity of the laminated glass measured from the interior of the vehicle is less than or equal to 2%.

In an embodiment of the present disclosure, the first glass substrate and/or the second glass substrate is made of tinted glass with a visible light transmittance not more than 50%.

In an embodiment of the present disclosure, the first glass substrate and/or the second glass substrate is made of clear glass with a visible light transmittance more than 70%.

In an embodiment of the present disclosure, the second glass substrate is made of clear glass, and a surface of the second glass substrate close to the bonding layer is provided with an infrared reflecting coating that includes at least one silver layer or at least one silver alloy layer.

In an embodiment of the present disclosure, the bonding layer is a tinted resin layer with a visible light transmittance less than or equal to 30%.

In an embodiment of the present disclosure, in Lab color space, a color of the laminated glass measured from the interior of the vehicle has value a of -6 to 3 and value b of -12 to 0.

In an embodiment of the present disclosure, the bonding layer is made of clear PVB with a visible light transmittance more than 90%.

In an embodiment of the present disclosure, a dimming element is further disposed between the coated glass and the second glass substrate, and the dimming element is a PDLC dimming film, an SPD dimming film or an EC dimming film.

The coated glass provided by the present disclosure has a low-emissivity layer, a metal absorption layer and an anti-reflection layer, and the low-emissivity layer can effectively reduce the heat radiation from the glass into interior, while preventing the heat radiation from the interior to exterior, thereby reducing the heat loss in the interior and achieving a heat preservation to a certain extent. A metal absorption layer is disposed between the low-emissivity layer and the anti-reflection layer to further reduce the reflectivity requirement of the laminated glass on the glass substrate in the vehicle. An outermost barrier layer is conducive to further improving the overall mechanical properties and the thermal stability of the layer, thereby providing a low-emissivity glass, with a simple production process, a low emissivity, a low visible light reflectivity and a neutral color, which can be used in the fields of building and vehicle glass. The emissivity value and the visible light reflectivity of the laminated glass having the coated glass of the present disclosure are reduced, and the inner surface of the laminated glass with the low-emissivity layer has a beautiful color.

In order that the above and other objectives, features and advantages of the present disclosure can be more readily understood, exemplarily embodiments of the present disclosure will be described below in detail with reference to the drawings.

### BRIEF DESCRIPTION OF THE DRAWINGS

In order to more clearly explain the technical solutions in the embodiments of the present disclosure or in the prior art, the drawings to be used in the description of the embodiments or the prior art will be briefly introduced as follows. Obviously, the drawings used in the following description only illustrate some embodiments of the present disclosure, and those of ordinary skill in the art can obtain other drawings from them without paying any creative effort. In the drawings,
FIG. 1 illustrates a schematic structural diagram of a coated glass according to the present disclosure;
FIG. 2 illustrates a schematic structural diagram of a laminated glass with a low-emissivity layer according to the present disclosure; and
FIG. 3 is a schematic structural diagram of another laminated glass with a low-emissivity layer according to the present disclosure.

Reference numerals:
1: outer glass substrate (second glass substrate); 2: inner glass substrate (first glass substrate); 3: bonding layer; 4: low-emissivity layer; 5: metal absorption layer; 6: anti-reflection layer; 6.1: high refractive index layer; 6.2: low refractive index layer; 7: outermost barrier layer; 8: innermost barrier layer.

### DETAILED DESCRIPTION OF THE EMBODIMENTS

In the following, the technical solutions in the embodiments of the present disclosure will be clearly and completely described with reference to the drawings for the embodiments of the present disclosure. Obviously, those described are only a part, rather than all, of the embodiments of the present disclosure. Based on the embodiments of the present disclosure, any other embodiment obtained by those of ordinary skill in the art without paying any creative labor are within the protection scope of the present disclosure.

The present disclosure provides a coated glass with a simple production process, a low emissivity, a low visible light reflectivity and a neutral color, which can be used in the fields of building and vehicle glass, and a laminated glass formed by the coated glass. The coated glass and the laminated glass can be used as low-emissivity glass, and are especially suitable for vehicle sunroof products.

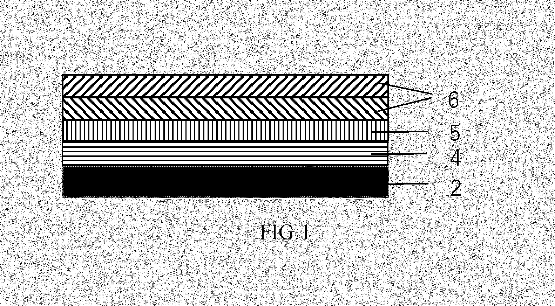

As illustrated in FIG. 1, the coated glass provided by the present disclosure includes a first glass substrate 2, a low-emissivity layer 4, a metal absorption layer 5 and an anti-reflection layer 6, in which
the low-emissivity layer 4 is deposited on one surface of the first glass substrate 2 and includes at least one transparent conductive oxide layer;
the metal absorption layer 5 is deposited on the low-emissivity layer 4; and
the anti-reflection layer 6 is deposited on the metal absorption layer 5.

In the coated glass provided by the present disclosure, the low-emissivity layer 4 on the surface of the first glass substrate can effectively reduce the heat radiation from the glass and achieve a heat preservation effect. The metal absorption layer 5 is deployed between the low-emissivity layer 4 and the anti-reflection layer 6 so as to further reduce the reflectivity of the glass.

The coated glass provided by the present disclosure can be mounted on a vehicle as vehicle window glass. Thus, the present disclosure further provides a laminated glass, including a coated glass as described above, a second glass substrate and a bonding layer;
And the coated glass includes a first glass substrate, a low-emissivity layer, a metal absorption layer and an anti-reflection layer, in which
the low-emissivity layer is deposited on one surface of the first glass substrate and includes at least one transparent conductive oxide layer;
the metal absorption layer is deposited on the low-emissivity layer;
the anti-reflection layer is deposited on the metal absorption layer;
the second glass substrate is bonded to the other surface of the first glass substrate through the bonding layer, and the coated glass is located inside the vehicle;
the laminated glass has a visible light transmittance less than or equal to 20%, and a visible light reflectivity, which is measured from the interior of the vehicle, less than or equal to 6%.

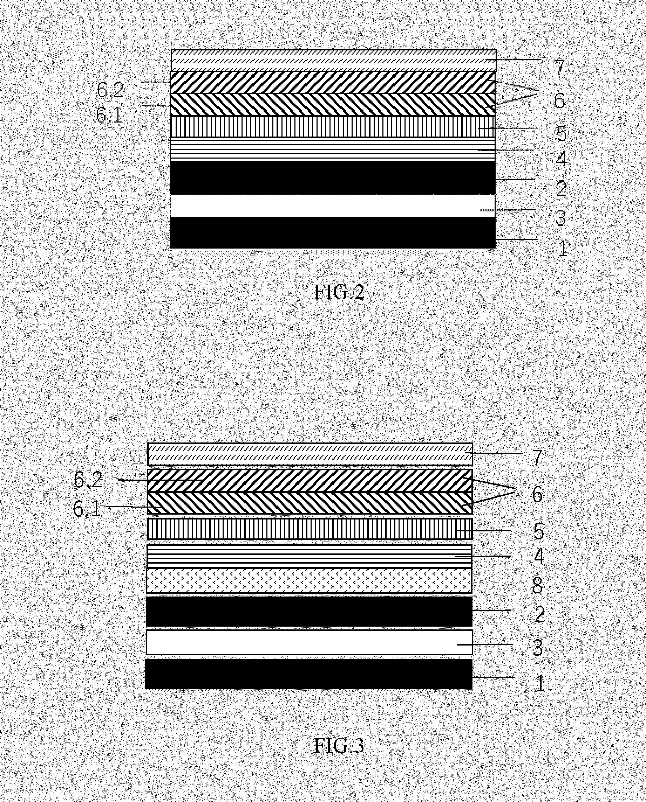

The laminated glass provided by the present disclosure can be used as a laminated glass of a vehicle sunroof with a low-emissivity layer, as illustrated in FIG. 2, which illustrates a schematic structural diagram of a laminated glass provided by an embodiment of the present disclosure, including:
a second glass substrate 1, a first glass substrate 2 and a bonding layer 3 therebetween, in which the first glass substrate 2 includes a low-emissivity layer 4, a metal absorption layer 5, an anti-reflection layer 6 and an outermost barrier layer 7, and in which the second glass substrate 1 serves as an outer glass substrate and the first glass substrate 2 serves as an inner glass substrate.

In an embodiment of the present disclosure, the coated glass includes a first glass substrate 2, a low-emissivity layer 4, a metal absorption layer 5 and an anti-reflection layer 6; the low-emissivity layer 4 is deposited on one surface of the first glass substrate 2 and includes at least one transparent conductive oxide layer; the metal absorption layer 5 is deposited on the low-emissivity layer 4; and the anti-reflection layer 6 is deposited on the metal absorption layer 5.

As illustrated in FIG. 2, the low-emissivity layer 4, the metal absorption layer 5, the anti-reflection layer 6 and the outermost barrier layer 7 are deposited on the surface of the first glass substrate 2 of the coated glass in sequence.

In an embodiment of the present disclosure, the glass substrate is clear or tinted with a low transmittance and may be made of a silicate glass substrate, a borate glass substrate or a polymer plexiglass substrate, the polymer plexiglass substrate is PC, PMMA, or the like.

Further, the first glass substrate is tinted glass with a visible light transmittance not more than 50%.

In an embodiment of the present disclosure, the low-emissivity layer 4 is a TCO transparent conductive layer, such as ITO, ATO, AZO or FTO, with a thickness more than or equal to 100 nm.

Specifically, in an embodiment of the present disclosure, the low-emissivity layer 4 has a thickness of 100 nm to 500 nm, and an emissivity value less than 0.3.

Further, the metal absorption layer 5 has a certain absorption property for visible light, and serves to absorb at least part of visible light in a wavelength range of 380 nm to 780 nm.

The material of the metal absorption layer 5 is selected from at least one of Ni, Cr, Ti, Nb, Mo and Si.

The metal absorption layer 5 has a thickness less than or equal to 10 nm, specifically a thickness of 3.5 nm to 10 nm, and exemplarily a thickness less than or equal to 5 nm. Further, the anti-reflection layer 6 may be a stacked layer structure of at least two layers with high and low refractive indexes superimposed on each other, i.e., the anti-reflection layer 6 includes at least one high refractive index layer 6.1 and at least one low refractive index layer 6.2 which are alternately stacked.

The high refractive index layer 6.1 has a refractive index n more than or equal to 1.7, specifically, the refractive index may be 1.7 to 2.3. The high refractive index lay 6.1 is an oxide or a nitride, and the material thereof is an oxide of at least one element selected from Zn, Sn, Nb, Ti, Ni, Cr and Ta, or a nitride or an oxynitride of at least one element selected from Si, Zr and Al. The high refractive index layer 6.1 has a thickness of 10 nm to 70 nm.

The refractive index n of the low refractive index layer 6.2 is less than 1.7, specifically, the refractive index may be 1.4 to 1.7. The material of the low refractive index layer 6.2 is an oxide of at least one element selected from Si, Al and B, or a fluoride of at least one element selected from Mg, Al and Ba, and the thickness of the low refractive index layer 6.2 is 20 nm to 150 nm.

In an embodiment of the present disclosure, the coated glass further includes an outermost barrier layer 7, which is deposited on the anti-reflection layer 6. The material of the outermost barrier layer 7 is a nitride or an oxynitride of at least one element selected from Si, Al, Zr, Ti, B and Ni, and the thickness of the outermost barrier layer 7 is not more than 30 nm, exemplarily 0 nm to 15 nm.

As illustrated in FIG. 3, in an embodiment of the present disclosure, an innermost barrier layer 8 is further deposited between the low-emissivity layer 4 of the coated glass and one surface of the first glass substrate 2, and the thickness of the innermost barrier layer 8 is more than or equal to 3 nm.

Specifically, the material of the innermost barrier layer 8 is an oxide of at least one element selected from Zn, Sn, Ti, Si, Al, Nb, Zr, Ni, Mg, Cr and Ta, or a nitride or an oxynitride of at least one element selected from Si, Al, Zr, B and Ti.

In an embodiment of the present disclosure, the first glass substrate of the coated glass is tinted glass which has a visible light transmittance not more than 50%.

The laminated glass in the embodiment of the present disclosure may be mounted on a vehicle, and the coated glass is located inside the vehicle. The second glass substrate 1 is bonded to the other surface of the first glass substrate 2 through the bonding layer 3. Further, the bonding layer 3 may be a polymer layer which is clear or tinted with a low visible light transmittance, the polymer layer is made of PVB, PU, EVA, SGP, or the like.

In an embodiment of the present disclosure, the bonding layer 3 is a tinted resin layer, which has a visible light transmittance less than or equal to 30%.

In an embodiment of the present disclosure, the visible light reflectivity of the laminated glass measured from the interior of the vehicle is less than or equal to 6%, exemplarily less than or equal to 5%, more exemplarily 4%, still exemplarily 3%, and most exemplarily less than or equal to 2%.

In an embodiment of the present disclosure, the first glass substrate 2 and/or the second glass substrate 1 are made of tinted glass which has a visible light transmittance not more than 50%.

In an embodiment of the present disclosure, the first glass substrate 2 and/or the second glass substrate 1 are made of clear glass which has a visible light transmittance more than 70%.

In an embodiment of the present disclosure, in Lab color space, a color of the laminated glass measured from the interior of the vehicle has value a of -6 to 3 and value b of -12 to 0.

In an embodiment of the present disclosure, the bonding layer 3 is made of clear PVB which has a visible light transmittance more than 90%.

In an embodiment of the present disclosure, a dimming element is further disposed between the coated glass and the second glass substrate 1, and the dimming element is a PDLC dimming film, an SPD dimming film or an EC dimming film.

Further, the laminated glass serves as sunroof with the low-emissivity layer 4 has a visible light transmittance Tl less than or equal to 50%, exemplarily less than or equal to 20%, and more exemplarily less than or equal to 10%.

Further, the inner surface of the laminated glass with the low- emissivity layer 4 serves as sunroof, that is, the surface close to the interior of the vehicle, has a visible light reflectivity R2 less than or equal to 6%, exemplarily less than or equal to 4%, and more exemplarily less than or equal to 2%.

Further, the low-emissivity layer 4 has a sheet resistance R less than or equal to 40 ohms per square (Ω/m²), exemplarily less than or equal to 30 ohms per square, and more exemplarily less than or equal to 20 ohms per square.

Further, the low-emissivity layer 4 has an emissivity value E less than or equal to 0.4, exemplarily less than or equal to 0.3, and more exemplarily less than or equal to 0.2.

The content of the present disclosure will be further described in conjunction with specific embodiments.

The laminated glass in the embodiment is used as a vehicle window. The 'outer glass substrate' in the embodiment of the present disclosure refers to a glass substrate in the laminated glass adjacent to the air outside the vehicle, that is, the aforementioned second glass substrate. The 'inner glass substrate' refers to a glass substrate in the laminated glass adjacent to air inside the vehicle, that is, the aforementioned first glass substrate. The `outer surface of the glass substrate' refers to an interface between the glass and the air. The 'inner surface of the glass substrate' refers to an interface between the glass and the bonding layer.

As illustrated in FIG. 2, a laminated glass with a low-emissivity layer according to an embodiment of the present disclosure includes an outer glass substrate 1, which may be clear glass with a visible light transmittance more than or equal to 70%. In order to further improve the heat insulation capability of the sunroof laminated glass and reduce the total solar energy transmittance thereof, it is better to deposit an infrared reflecting coating on a surface of the outer glass substrate 1 close to a bonding layer 3. The infrared reflecting coating includes at least one silver layer or at least one silver alloy layer, such as two silver layers or two silver alloy layers, three silver layers or three silver alloy layers, or four silver layers or four silver alloy layers. The infrared reflecting coating is used to reflect infrared rays in sunlight, and more exemplarily, the visible light transmittance of the clear glass is more than or equal to 90%.

The bonding layer 3 is located between the outer glass substrate 1 and the inner glass substrate 2.

An outer surface of the inner glass substrate 2 is sequentially distributed with the low-emissivity layer 4, the metal absorption layer 5, the anti-reflection layer 6, and the outermost barrier layer 7. The outermost barrier layer 7 is a layer farthest from the glass surface.

In order to fulfill the light adjustment requirement of the laminated glass and adapt for different scenes, a dimming element is further disposed between the outer glass substrate 1 and the inner glass substrate 2. The dimming element may be, for example, a PDLC dimming film, an SPD dimming film, an EC dimming film, or the like.

The bonding layer 3 of the present disclosure may be an organic polymer layer, which is clear or tinted with a low transmittance, the organic polymer layer is made of PVB, PU, EVA, SGP, or the like. Since the transmittance of the sunroof laminated glass is low, the visible light transmittance of the bonding layer 3 is usually 0% to 30%.

In an embodiment of the present disclosure, the low-emissivity layer 4 has the function of reflecting or absorbing the infrared radiation while having a high visible light transmittance, and is usually a TCO layer which may be made of a material such as ITO, ATO, AZO, FTO or the like.

The low-emissivity layer 4 is coated on the outer surface of the inner glass substrate 2 by a PVD or CVD method, where the low-emissivity layer 4 of the present disclosure can effectively reduce the heat radiation from the glass into interior while preventing the heat radiation from the interior to the exterior, thereby reducing the heat loss in the interior and achieving a heat preservation to a certain extent.

The thickness of the low-emissivity layer 4 in the embodiment of the present disclosure is at least more than or equal to 100 nm, but in order that the glass can have a low emissivity value, which is for example less than 0.3 or even less than 0.2, it is necessary to increase the thickness of the low-emissivity layer 4 as much as possible. However, with the increase of the thickness of the low-emissivity layer 4, the reflectivity of the visible light also increases, even more than 10%, and the optical indexes such as color will also change, even deviating from the neutral color. For the vehicle glass, a high reflectivity and a dark color will cause discomfort to passengers and affect the aesthetics of the vehicle, which is not allowed. In order to further reduce the reflectivity of the low-emissivity layer 4 and adjust the color, the present disclosure sequentially deposits the metal absorption layer 5 and the anti-reflection layer 6 on the low-emissivity layer 4.

The anti-reflection layer 6 in the embodiment of the present disclosure is a conventional layer for reducing the reflectivity, and generally has a stacked layer structure of two or more layers with high and low refractive indexes superimposed on each other, in which the high refractive index n1 is more than or equal to 1.7, usually 1.7 to 2.3, and the low refractive index n2 is less than 1.7, usually 1.4 to 1.7.

The material of the high/low refractive index layer is not limited in the embodiment of the present disclosure. The material of the high refractive index layer in the embodiment of the present disclosure is an oxide of at least one element selected from Zn, Sn, Nb, Ti, Ni, Cr and Ta, such as ZnSnO, TiO, NbO, etc., or a nitride or an oxynitride of at least one element selected from Si, Zr and Al, such as Si₃N₄ SiAlN, SiZrN, etc. The material of the low refractive index layer is an oxide of at least one element selected from Si, Al, and B, or a fluoride of at least one element selected from Mg, Al, and Ba.

In the present disclosure, the anti-reflection layer 6 is optionally coated by magnetron sputtering. Particularly, in order to reduce the production cost, the anti-reflection layer 6 in the embodiment of the present disclosure exemplarily configured with a stack structure of two layers with alternating high and low refractive indexes, that is, the anti-reflection layer 6 includes one high refractive index layer 6.1 and one low refractive index layer 6.2 which are alternately disposed, in which the high refractive index layer 6.1 has a thickness of 10 nm to 70 nm, exemplarily 10 nm to 50 nm, and the low refractive index layer 6.2 has a thickness of 20 nm to 150 nm, exemplarily 30 nm to 110 nm.

In order to further reduce the reflectivity of the laminated glass in the vehicle, a metal absorption layer 5 is deposited between the low-emissivity layer 4 and the anti-reflection layer 6 in the embodiment of the present disclosure. The metal absorption layer 5 may include one of Ni, Cr, Ti, Nb, Mo, Si or combinations thereof. The metal absorption layer 5 can absorb and reflect the visible light to a certain extent, and the thickness thereof should not be too large because the reflectivity of a thick metal absorption layer 5 for the visible light is obviously increased. Therefore, in the embodiment of the present disclosure, the thickness of the metal absorption layer 5 is less than or equal to 10 nm, exemplarily less than or equal to 5 nm.

The glass including the low-emissivity layer 4 in the embodiment of the present disclosure may be tempered or hot-bent at a temperature of 500 °C to 700 °C. In order to further improve the stability of the heat treatment of the low-emissivity layer 4, an outermost barrier layer 7 is deposited on the anti-reflection layer 6 in the embodiment of the present disclosure. The material of the outermost barrier layer 7 is a nitride or an oxynitride of at least one element selected from Si, Al, Zr, Ti, B and Ni, exemplarily a silicon nitride layer doped with Al or Zr, such as Si₃N₄, SiAlN, SiZrN, or the like. The outermost barrier layer 7 is conducive to further improving the overall mechanical properties and thermal stability of the layer. However, a thick outermost barrier layer 7 will affect the anti-reflection effect of the anti-reflection layer 6, which is unfavorable to the reduction of the reflectivity of the layer. Therefore, the thickness of the outermost barrier layer 7 is less than or equal to 30 nm, exemplarily less than or equal to 15 nm.

By adopting the above method, the emissivity value of the laminated glass with the low-emissivity layer 4 provided by the present disclosure is less than 0.3. The visible light reflectivity of the inner surface of the laminated glass with the low-emissivity layer 4 is less than 4% (0° angle test). The inner surface of the laminated glass with the low-emissivity layer 4 has a beautiful color, for example, value a of -6 to 3, and value b of 0 to -12.

### Specific Embodiments:

The present disclosure will be described in more detail with reference to the specific implementations. The following laminated glasses with low-emissivity layers and having different layer structures are selected for comparative tests.

### Comparative Examples 1-4 and Embodiment 1

Comparative Example 1: a sunroof laminated glass with a low-emissivity layer, including an outer glass substrate 1 and an inner glass substrate 2 both made of 2.1mm clear glass (white glass), in which an inner surface of the inner glass substrate 2 is sequentially deposited with a 10nm Si₃N₄ innermost barrier layer, a 120nm ITO low-emissivity layer and a 35nm Si₃N₄ outermost barrier layer by magnetron sputtering; both the inner glass substrate 2 after coating and deposition and the outer glass substrate 1 are hot-bent at 550°C to 650°C, and bonded by a gray PVB bonding layer with a transmittance of 10±2%.

Comparative Example 2: a sunroof laminated glass with a low-emissivity layer, including an outer glass substrate 1 and an inner glass substrate 2 both made of 2.1mm clear glass (white glass), in which an inner surface of the inner glass substrate 2 is sequentially deposited with an 8nm Si₃N₄ innermost barrier layer, a 130nm ITO low-emissivity layer, a 5nm NiCr metal absorption layer and a 35nm Si₃N₄ outermost barrier layer by magnetron sputtering; both the inner glass substrate 2 after coating and deposition and the outer glass substrate 1 are hot-bent at 550°C to 650°C, and bonded by a gray PVB bonding layer with a transmittance of 10 ± 2%.

Comparative Example 3: a sunroof laminated glass with a low-emissivity layer, including an outer glass substrate 1 and an inner glass substrate 2 both made of 2.1mm clear glass (white glass), in which an inner surface of the inner glass substrate 2 is sequentially deposited with an 8nm Si₃N₄ innermost barrier layer, a 130nm ITO low-emissivity layer, a 9nm NiCr metal absorption layer and a 35nm Si₃N₄ outermost barrier layer by magnetron sputtering; both the inner glass substrate 2 after coating and deposition and the outer glass substrate 1 are hot-bent at 550°C to 650°C, and bonded by a gray PVB bonding layer with a transmittance of 10±2%.

Comparative Example 4: a sunroof laminated glass with a low-emissivity layer, including an outer glass substrate 1 and an inner glass substrate 2 both made of 2.1mm clear glass (white glass), in which an inner surface of the inner glass substrate 2 is sequentially deposited with a 5nm Si₃N₄ innermost barrier layer, a 118nm ITO low-emissivity layer, am 8nm Si₃N₄ high refractive index layer and a 180nm SiO₂ low refractive index layer by magnetron sputtering, and an anti-reflection layer with a two-layered structure, which is formed by the Si₃N₄ high refractive index layer and the SiO₂ low refractive index layer; both the inner glass substrate 2 after coating and deposition and the outer glass substrate 1 are hot-bent at 550°C to 650°C, and bonded by a gray PVB bonding layer with a transmittance of 10±2%.

Embodiment 1: a sunroof laminated glass with low-emissivity layer, including an outer glass substrate 1 and an inner glass substrate 2 both made of 2.1mm clear glass (white glass), in which an inner surface of the inner glass substrate 2 is sequentially deposited with an 8nm Si₃N₄ innermost barrier layer, a 130nm ITO low-emissivity layer, a 3.5nm NiCr metal absorption layer, a 11nm Si₃N₄ high refractive index layer, a 46nm SiO₂ low refractive index layer and a 10nm Si₃N₄ outermost barrier layer by magnetron sputtering; both the inner glass substrate 2 after coating and deposition and the outer glass substrate 1 are hot-bent at 550°C to 650°C, and bonded by a gray PVB bonding layer with a transmittance of 10±2%.

For the coated glass and the laminated glass obtained by layers deposition in Comparative Examples 1 to 4 and Embodiment 1, the visible light reflectivity, the reflected color inside the vehicle and the emissivity are measured, and the measurement results are recorded in Table 1.

**Table 1: Measurement Results of Coated Glass and Laminated Glass of Comparative Examples 1 to 4 and Embodiment 1**

| | Layer | Comparative Example 1 | Comparative Example 2 | Comparative Example 3 | Comparative Example 4 | Embodiment 1 |
|---|---|---|---|---|---|---|
| Inner glass substrate 2 | White glass of 2.1 mm | | | | | |
| Innermost barrier layer 8 | Si₃N₄ | 10nm | 8nm | 8nm | 5nm | 8nm |
| Low-emissivity layer 4 | ITO | 120nm | 130nm | 130nm | 118nm | 130nm |
| Metal absorption layer 5 | NiCr | / | 5nm | 9nm | / | 3.5nm |
| High refractive index layer 6.1 | Si₃N₄ | / | / | / | 8nm | 11nm |
| Low refractive index layer 6.2 | SiO₂ | / | / | / | 180nm | 46nm |
| Outermost barrier layer 7 | Si₃N₄ | 35nm | 35nm | 35nm | / | 10nm |
| Visible light reflectivity of coated glass measured from a side of layers after heat treatment | | 10.50% | 6.32% | 7.82% | 6.28% | 3.58% |
| Sheet resistance of coated glass after heat treatment (Ω/m²) | | 22.5 | 22 | 22 | 22.8 | 21.5 |
| Visible light reflectivity of laminated glass measured from the interior of vehicle | | 9.50% | 5.20% | 5.81% | 2.82% | 1.58% |
| Reflected color of laminated | L* | 35.6 | 29.8 | 26.5 | 29.5 | 11.2 |
| glass measured from the interior of vehicle in Lab color space | a* | -6.8 | 0.5 | 10.2 | -1.2 | -4.2 |
| | b* | -15.8 | -9.5 | 6.2 | -3.5 | -8.2 |
| Emissivity of laminated glass measured from the interior of vehicle | | 0.24 | 0.21 | 0.2 | 0.24 | 0.21 |

As illustrated in Table 1, neither of the metal absorption layer and the anti-reflection layer is deposited on the ITO layer of Comparative Example 1, and the visible light reflectivity of the coated glass is more than 10%. Even after the laminated glass is formed by coated glass combined with the gray PVB, the visible light reflectivity of the laminated glass is still more than 6%, which cannot fulfill the requirement of eliminating the mirror reflection of the sunroof glass of the vehicle.

In Comparative Examples 2 and 3, metal absorption layers with different thicknesses are deposited on the ITO layer, but the anti-reflection layer is not deposited thereon, and the visible light reflectivity of the coated glass is more than 6%. In addition, after the laminated glass is formed by coated glass combined with the gray PVB, the visible light reflectivity of the laminated glass is still more than 5% although being less than 6%. Even more, with the increase of the thickness of the metal absorption layer, the visible light reflectivity rises, and the reflected color is increasingly deviated from the neutral color, such that the appearance color cannot fulfill the requirement of a good visual appearance.

In Comparative Example 4, the anti-reflection layer is deposited on the ITO layer, but no metal absorption layer is deposited thereon, and the visible light reflectivity of the coated glass is more than 6%. After the laminated glass is formed by coated glass combined with the gray PVB, the visible light reflectivity of the laminated glass can be less than 3%, and the reflected color is a neutral color. However, the thickness of the anti-reflection layer is about 2 to 3 times that in Embodiment 1, which prolongs the layers deposition time of the magnetron sputtering and is not conducive to reducing the production cost.

Compared with Comparative Examples 1 to 4, in Embodiment 1, by depositing the metal absorption layer and the anti-reflection layer with appropriate thicknesses, it is possible to obtain a coated glass with a visible light reflectivity less than 4%, a laminated glass with a visible light reflectivity less than 2%, and a neutral reflected color at a higher production efficiency and a lower cost.

### Embodiments 2 to 6

Embodiment 2: a sunroof laminated glass with a low-emissivity layer, including an outer glass substrate 1 and an inner glass substrate 2 both made of 2.1mm clear glass (white glass), in which an inner surface of the inner glass substrate 2 is sequentially deposited with a 5nm Si₃N₄ innermost barrier layer, a 160nm ITO low-emissivity layer, a 4nm NiCr metal absorption layer, a 23nm Si₃N₄ high refractive index layer, a 60nm SiO₂ low refractive index layer, and a 5nm Si₃N₄ outermost barrier layer by magnetron sputtering; both the inner glass substrate 2 after coating and deposition and the outer glass substrate 1 are hot-bent at 550°C to 650 °C , and bonded by a gray PVB bonding layer with a transmittance of 10+2%.

Embodiment 3: a sunroof laminated glass with low-emissivity layer, including an outer glass substrate 1 and an inner glass substrate 2 both made of 2.1mm clear glass (white glass), in which an inner surface of the inner glass substrate 2 is sequentially deposited with a 9nm Si₃N₄ innermost barrier layer, a 130nm ITO low-emissivity layer, a 3.5nm NiCr metal absorption layer, a 20nm ZnSnOx high refractive index layer and a 60nm SiO₂ low refractive index layer by magnetron sputtering; both the inner glass substrate 2 after coating and deposition and the outer glass substrate 1are hot-bent at 550°C to 650°C, and bonded by a gray PVB bonding layer with a transmittance of 10±2%.

Embodiment 4: a sunroof laminated glass with a low-emissivity layer, including an outer glass substrate 1 and an inner glass substrate 2 both made of 2.1mm clear glass (white glass), in which an inner surface of the inner glass substrate 2 is sequentially deposited with a 9nm Si₃N₄ innermost barrier layer, a 130nm ITO low-emissivity layer, a 3.5nm NiCr metal absorption layer, a 24nm ZnSnOx high refractive index layer, a 55nm SiO₂ low refractive index layer, and an 8nm Si₃N₄ outermost barrier layer by magnetron sputtering; both the inner glass substrate 2 after coating and deposition and the outer glass substrate 1 are hot-bent at 550°C to 650°C, and bonded by a gray PVB bonding layer with a transmittance of 10±2%.

Embodiment 5: a sunroof laminated glass with a low-emissivity layer, including an outer glass substrate 1 and an inner glass substrate 2 both made of 2.1mm clear glass (white glass), in which an inner surface of the inner glass substrate 2 is sequentially deposited with a 10nm Si₃N₄ innermost barrier layer, a 280 nm AZO low-emissivity layer, a 3.5nm NiCr metal absorption layer, a 24nm Si₃N₄ high refractive index layer and a 58nm SiO₂ low refractive index layer by magnetron sputtering; both the inner glass substrate 2 after coating and deposition and the outer glass substrate 1are hot-bent at 550°C to 650 °C, and bonded by a gray PVB bonding layer with a transmittance of 10±2%.

Embodiment 6: a sunroof laminated glass with a low-emissivity layer, including an outer glass substrate 1 and an inner glass substrate 2 both made of 2.1mm gray glass (gray glass with a visible light transmittance of 40%), in which an inner surface of the inner glass substrate 2 is sequentially deposited with a 10nm Si₃N₄ innermost barrier layer, a 120nm ITO low-emissivity layer, a 7.5 nm NiCr metal absorption layer, a 38nm TiOx high refractive index layer, a 64nm SiO₂ refractive index layer and a 9nm Si₃N₄ outermost barrier layer by magnetron sputtering; both the inner glass substrate 2 after coating and deposition and the outer glass substrate 1are hot-bent at 550°C to 650 °C, and bonded by a clear PVB bonding layer with a visible light transmittance more than 90%.

For the coated glass and the laminated glass obtained by layers deposition in Embodiments 1, the visible light reflectivity, the reflected color inside the vehicle and the emissivity are measured, and the measurement results are recorded in Table 2.

**Table 2: Measurement Results of Coated Glass and Laminated Glass of Embodiments 1**

| | | Embodiment 2 | Embodiment 3 | Embodiment 4 | Embodiment 5 | Embodiment 6 |
|---|---|---|---|---|---|---|
| Inner glass substrate 2 | | 2. 1mm white glass | 2.1mm white glass | 2.1mm white glass | 2. 1mm white glass | 2.1mm gray glass |
| Innermost barrier layer 8 | | 5nm Si₃N₄ | 9nm Si₃N₄ | 9nm Si₃N₄ | 10nm Si₃N₄ | 10nm Si₃N₄ |
| Low-emissivity layer 4 | | 160nm ITO | 130nm ITO | 130nm ITO | 280mn AZO | 120nm ITO |
| Metal absorption layer 5 | | 4nm NiCr | 3.5nm NiCr | 3.5nm NiCr | 3.5nm NiCr | 7.5nm NiCr |
| High refractive index layer 6.1 | | 23nm Si₃N₄ | 20nm ZnSnOx | 24nm ZnSnOx | 24nm Si₃N₄ | 38nm TiOx |
| Low refractive index layer 6.2 | | 60nm SiO₂ | 60nm SiO₂ | 55nm SiO₂ | 58nm SiO₂ | 64nm SiO₂ |
| Outermost barrier layer 7 | | 5nm Si₃N₄ | / | 8nm Si₃N₄ | 9nm Si₃N₄ | 9nm Si₃N₄ |
| Visible light reflectivity of coated glass measured from a side of layers after heat treatment | | 3.80% | 4.88% | 3.52% | 3.58% | 3.25% |
| Sheet resistance of coated glass after heat treatment (Ω/m²) | | 17.5 | 25.3 | 22 | 17 | 22.3 |
| Visible light reflectivity of laminated glass measured from the interior of vehicle | | 2.60% | 2.58% | 1.61% | 1.58% | 2.58% |
| Reflected color of laminated glass measured from the interior of vehicle in Lab | L* | 15.6 | 9.1 | 9.2 | 14.8 | 18.2 |
| | a* | -1.02 | 1.2 | -3.2 | -1.2 | -0.5 |
| | b* | -5.39 | -7.2 | -2.1 | -6.8 | -6.5 |
| color space | | | | | | |
| Emissivity of laminated glass measured from the interior of vehicle | | 0.18 | 0.24 | 0.22 | 0.18 | 0.21 |

As illustrated in Table 2, in Embodiment 3, a ZnSnOx layer is used as the high refractive index layer, and no outermost barrier layer is provided. Compared with the case where Si₃N₄ layer is used as the high refractive index layer, the layer square resistance of the coated glass after the heat treatment is increased. Therefore, the high refractive index layer in the anti-reflection layer is optionally a nitride layer or an oxynitride layer containing Si, which is conductive to improving the heat treatment stability of the layer.

Compared with Embodiment 3, in Embodiment 4 a ZnSnOx layer is used as the high refractive index layer and an outermost barrier layer is added, which is conductive to reducing the layer square resistance after the heat treatment.

Although in Embodiments 2 and 5, a thick ITO or AZO layer is applied to the laminated glass , a metal absorption layer and an anti-reflection layer are simultaneously disposed, and it is still possible to obtain a coated glass with a visible light reflectivity less than 4%, a laminated glass with a visible light reflectivity less than 3% or less than 2%, and a neutral reflected color.

In Embodiment 6, the product combination of the gray glass and the clear PVB is applied to the laminated glass. By disposing the metal absorption layer and the anti-reflection layer simultaneously, it is possible to obtain the coated glass with a visible light reflectivity less than 4%, the laminated glass with a visible light reflectivity less than 3%, and a neutral reflected color.

The specific embodiments of the present disclosure are described as above, but the present disclosure is not limited thereto, and any improvement, equivalent modification or substitution made according to the technical points of the present disclosure belongs to the protection scope of the present disclosure. The embodiments listed above describe the structural compositions of the coated glass and the laminated glass, but the specific manufacturing processes and parameters of the coated glass and the laminated glass are not described. It can be understood that those undescribed are well known to persons of ordinary skill in the art, and do not affect the protection scope of the present disclosure.

## Claims

1. A coated glass, wherein the coated glass comprising a first glass substrate, a low-emissivity layer, a metal absorption layer and an anti-reflection layer,
the low-emissivity layer is deposited on one surface of the first glass substrate, and comprises at least one transparent conductive oxide layer;
the metal absorption layer is deposited on the low-emissivity layer; and
the anti-reflection layer is deposited on the metal absorption layer.

2. The coated glass according to claim 1, wherein the low-emissivity layer has a thickness of 100 nm to 500 nm, and an emissivity value less than 0.

3. the transparent conductive oxide layer is selected from an ITO film layer, an ATO film layer, an AZO film layer or an FTO film layer.

4. The coated glass according to claim 1, wherein the anti-reflection layer comprises at least one high refractive index layer and at least one low refractive index layer, which are alternately stacked, and the high refractive index layer has a refractive index of 1.7 to 2.3, and the low refractive index layer has a refractive index of 1.4 tol.7.

5. The coated glass according to claim 4, wherein a material of the high refractive index layer is an oxide of at least one selected from Zn, Sn, Nb, Ti, Ni, Cr and Ta, or a nitride or an oxynitride of at least one selected from Si, Zr and Al;
a material of the low refractive index layer is an oxide of at least one selected from Si, Al and B, or a fluoride of at least one selected from Mg, Al and Ba.

6. The coated glass according to claim 4, wherein the high refractive index layer has a thickness of 10 nm to 70 nm, and the low refractive index layer has a thickness of 20 nm to 150 nm.

7. The coated glass according to claim 1, wherein the metal absorption layer is configured to absorb at least part of visible light in a wavelength range of 380 nm to 780 nm, and has a thickness of 3.5 nm to 10 nm.

8. The coated glass according to claim 1, wherein the metal absorption layer is in direct contact with the low-emissivity layer, and a material of the metal absorption layer is selected from at least one of Ni, Cr, Ti, Nb, Mo and Si.

9. The coated glass according to claim 1, wherein an innermost barrier layer is further deposited between the low-emissivity layer and the one surface of the first glass substrate, a thickness of the innermost barrier layer is more than or equal to 3 nm, and a material of the innermost barrier layer is an oxide of at least one selected from Zn, Sn, Ti, Si, Al, Nb, Zr, Ni, Mg, Cr and Ta, or a nitride or an oxynitride of at least one selected from Si, Al, Zr, B, and Ti.

10. The coated glass according to claim 1, wherein the coated glass further comprises an outermost barrier layer deposited on the anti-reflection layer, a material of the outermost barrier layer is a nitride or an oxynitride of at least one selected from Si, Al, Zr, Ti, B and Ni, and a thickness of the outermost barrier layer is not more than 30 nm.

11. The coated glass according to claim 1, wherein the first glass substrate is made of colored glass with a visible light transmittance not more than 50%.

12. A laminated glass mountable on a vehicle, wherein the laminated glass comprises the coated glass according to any one of claim 1 to 11, a second glass substrate and a bonding layer, the second glass substrate being bonded to the other surface of the first glass substrate through the bonding layer; and the coated glass is located inside the vehicle;
a visible light transmittance of the laminated glass is less than or equal to 20%, and a visible light reflectivity of the laminated glass measured from the interior of the vehicle is less than or equal to 6%.

13. The laminated glass according to claim 12, wherein the visible light reflectivity of the laminated glass measured from the interior of the vehicle is less than or equal to 2%.

14. The laminated glass according to claim 12, wherein the first glass substrate and/or the second glass substrate is made of colored glass with a visible light transmittance not more than 50%.

15. The laminated glass according to claim 12, wherein the first glass substrate and/or the second glass substrate is made of clear glass with a visible light transmittance more than 70%.

16. The laminated glass according to claim 12, wherein the second glass substrate is made of clear glass, and a surface of the second glass substrate close to the bonding layer is provided with an infrared reflecting coating that comprises at least one silver layer or silver alloy layer.

17. The laminated glass according to claim 12, wherein the bonding layer is a tinted resin layer with a visible light transmittance less than or equal to 30%.

18. The laminated glass according to claim 12, wherein in Lab color space, a color of the laminated glass measured from the interior of the vehicle has value a of -6 to 3 and value b of -12 to 0.

19. The laminated glass according to claim 12, wherein the bonding layer is made of transparent PVB with a visible light transmittance more than 90%.

20. The laminated glass according to claim 12, wherein a dimming element is further disposed between the coated glass and the second glass substrate, and the dimming element is a PDLC dimming film, an SPD dimming film or an EC dimming film.
